# EUROPÄISCHE PATENTSCHRIFT

(11) **EP 0 731 637 B1**
(45) Veröffentlichungstag und Bekanntmachung des Hinweises auf die Patenterteilung: **17.12.1997**
(21) Anmeldenummer: 95902119.7
(22) Anmeldetag: 02.12.1994
(51) Int. Cl.: A21B 5/02, A21B 3/15

(54) **VORRICHTUNG ZUM BACKEN HOHLER TEIGWAREN**
DEVICE FOR BAKING HOLLOW PASTRY GOODS
DISPOSITIF POUR LA CUISSON AU FOUR DE PATES PATISSIERES CREUSES

(30) Priorität: 02.12.1993 DE 9318422 U
(43) Veröffentlichungstag der Anmeldung: 18.09.1996
(73) Patentinhaber: Röcker, Hans, Dipl.-Ing., D-35315 Homberg/Ohm (OT Büssfeld) (DE)
(72) Erfinder: Röcker, Hans, Dipl.-Ing., D-35315 Homberg/Ohm (OT Büssfeld) (DE)
(74) Vertreter: Knefel, Cordula, Dipl.-Phys.
(86) Internationale Anmeldenummer: EP9404019
(87) Internationale Veröffentlichungsnummer: WO9515086

(56) Entgegenhaltungen:
- WO-A-94/12035
- DE-A- 3 833 394
- US-A- 3 410 691
- US-A- 3 424 076

## Beschreibung

Die Erfindung betrifft eine Vorrichtung zum Backen hohler Teigwaren nach dem Oberbegriff des Anspruches 1.

Derartige Vorrichtungen werden dazu verwendet, beispielsweise um Schillerlocken oder Mozartrollen zu backen. Schillerlocken weisen einen kegelförmigen Hohlraum auf, in den zum Verzehr eine Füllung (Schlagsahne oder dergleichen) eingebracht wird. Mozartrollen weisen einen etwa zylinderförmigen Hohlraum auf, welcher zum Verzehr ebenfalls eine Füllung erhält.

Die zum Stand der Technik gehörenden Formen bestehen aus einem Blech, welches beispielsweise Zylinderform oder Kegelform aufweist. Ein kegelförmiges Blech, gemäß dem Oberbegriff des Anspruchs 1, ist aus der DE-A-3 833 394 bekannt. An den Enden ist die Form offen, so daß die Heißluft beim Backen durch den Hohlraum der Form streichen kann. Das zur Form gebogene Blech ist entweder längs einer Mantellinie mit seinen Rändern ineinandergebördelt, oder man läßt hier die Blechstücke einfach zusammenstoßen, so daß zwischen ihnen ein geringer Luftspalt verbleibt. Auf eine derartige Form wird der in Streifen geschnittene Teig, zum Beispiel ein Blätterteig, spiralförmig gewickelt, derart, daß sich die Ränder des Streifens bei der Wicklung überdecken. Diese mit dem Teig umwickelte Form wird in den Backofen gelegt und hier der Backhitze ausgesetzt. Während des Backvorganges geht der Teig auf, so daß die Schillerlocken oder Mozartrollen ihre typische Form erhalten.
Durch die Blechform bedingt, gelangt jedoch die Backofenhitze beim Backvorgang nicht gleichmäßig an den Teig heran, da von innen her zu dem Teig der Backware die Wärme nur durch Wärmeleitung über das Blech der Form gelangt. Deshalb wird der Teig außen stärker der Hitze ausgesetzt als innen. Dies bewirkt einen ungleichmäßigen Backvorgang. Hinzu kommt, daß durch das Aufquellen des Teiges beim Backvorgang bedingt, sich dieser über die Ränder der Backform legt, so daß nach dem Ausbacken des Teiges die Form schwer aus dem Backwerk entfernbar ist. Deshalb wird das Ende des gebackenen Teigstückes beim Entfernen der Form häufig abgerissen, wobei das gesamte Backwerk, insbesondere wenn es aus Blätterteig besteht, zerstört werden kann. Man hat sich hiergegen bereits dadurch geholfen, daß man den aufgewickelten Teigstreifen nicht bis zu den Enden der Form hin aufgewickelt hat. Hierdurch wird das Backwerk kürzer oder die Form muß länger gestaltet werden, wodurch beim Backen im Ofen Platz verlorengeht. Man hat sich deshalb auch bereits dadurch geholfen, daß man den Teig, insbesondere an seinen Enden, vor dem Backen vorzugsweise mit Eigelb bestrichen hat, damit er sich seitlich nicht ausdehnt. Diese Maßnahme zeigt jedoch den Nachteil, daß das Eigelb und damit das Kuchenstück zumindest dort, wo das Eigelb die Form und das Kuchenstück berührt, das heißt an den Enden, hier das Kuchenstück sehr fest an der Form festklebt, so daß wiederum Schwierigkeiten bei der Entfernung der Form aus dem gebackenen Kuchenstück auftreten.

Das technische Problem der vorliegenden Erfindung besteht darin, eine Form für hohles Backwerk, insbesondere für das Backen von Schillerlocken oder Mozartrollen anzugeben, welche sich leicht, das heißt ohne Schwierigkeiten nach dem Backen aus dem Backwerk entfernen läßt, ohne dieses zu zerstören oder zu beschädigen.

Diese Aufgabe wird durch das kennzeichnende Merkmal des Anspruches 1 gelöst. Dadurch, daß jetzt als Form ein elastischer, zu der gewünschten Innenform spiralförmig gewickelter Draht verwendet wird, kann der Draht nach dem Backen wie eine Schraube aus dem Kuchenstück herausgedreht werden. Da der Draht und damit die Windungen elastisch sind, verringern sie beim Herausdrehen aus dem Kuchenstück ihren Durchmesser, so daß sich die Durchmesser der Drahtwindungen nach und nach zum Ende hin verkleinern, indem sich beim Drehen der Spirale die ersten Drahtwindungen sofort vom Inneren des Kuchenstückes lösen, die weiteren aber erst nach und nach. Nach einigen wenigen schraubenförmigen Drehungen kann die gesamte Drahtspirale in axialer Richtung aus dem Kuchenstück herausgezogen werden.

Die letzte, üblicherweise den größten Durchmesser aufweisende Drahtwindung läuft hierzu vorteilhaft in einen Griff aus. Der Draht braucht hierzu nur derart verlängert und eingebogen zu werden, daß er beispielsweise längs des Durchmessers der letzten Drahtwindung angeordnet ist oder vorteilhaft aus der Ebene der letzten Drahtwindung als Griff herausgebogen ist, vorteilhaft halbkreisförmig oder ellipsenförmig.

Der Draht selbst besteht zweckmäßig aus Edelstahl. Es kann aber auch als Draht ein hitzebeständiger Kunststoffdraht verwendet werden, wenn dieser nur elastisch genug ist und sich aus dem Kuchenstück nach dem Backen herausdrehen läßt.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: ein erstes Ausführungsbeispiel;
- Fig. 2: die Ansicht der Fig. 1 in Richtung des Pfeiles II;
- Fig. 3: ein geändertes Ausführungsbeispiel.

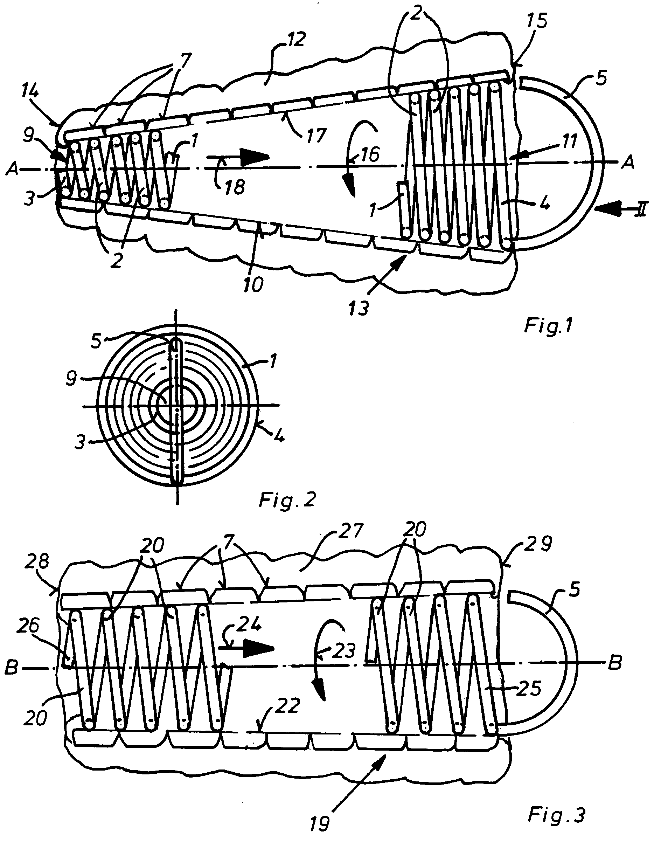

Gemäß Fig. 1 ist ein elastischer Draht (1) schraubenlinienförmig zu einer Spirale (13) gewickelt, das heißt, die Spirale (13) folgt der Oberfläche eines Kegelstumpfes (10). Die Windungen (2) der Spirale (13) weisen einen Abstand voneinander auf. Der aus den Drahtwindungen (2) gebildete Kegelstumpf (10) weist an seinem linken Ende eine Öffnung (9) auf und an seinem rechten Ende eine Öffnung (11). Auf die Spirale (13) wird der in Streifen (7) geschnittene Kuchenteig gewickelt.

Beim Backen kann die Heißluft einerseits durch die Drahtspirale (13) streichen, und sie gelangt von innen her zwischen den Windungen (2) der Spirale (13) an den Kuchenteig (17). In gleicher Weise stehen die Teigstreifen (7) auch von außen her unter dem Einfluß der Backofenhitze.

Beim Backvorgang geht der Kuchenteig auf, so daß er die Kuchenform (12) einnimmt, welche gemäß Fig. 1 einer Schillerlocke entspricht. Die Enden (14, 15) der Schillerlocke können hierbei über die letzten Windungen (3, 4) der Spirale (13) treten und diese Windungen übergreifen.

Um die Spirale (13) nach dem Backen aus dem Kuchenstück zu entfernen, läuft die letzte Windung (4) (Windung mit dem größten Durchmesser) durch eine Verlängerung des Drahtes in einen Griff (5) aus. Der Griff (5) liegt in der Ebene der letzten Drahtwindung (4) und ist halbkreisförmig oder halbellipsenförmig umgebogen, um eine gute Griffigkeit zu erhalten. Zum Entfernen der Spirale (13) aus dem Kuchenstück (12) wird die Spirale (13) um die Achse A-A der Spirale (13) in Richtung des Pfeiles (16) gedreht. Wegen der Elastizität des verwendeten Drahtes (1) verkleinern sich hierbei wenigstens die Windungen in der Nähe des Griffes (5), so daß die Spirale (13) auch durch den Übergriff des Endes (15) des gebackenen Teiges herausbewegt werden kann.

Fig. 3 zeigt eine Spirale (19), deren Windungen (20) etwa der Oberfläche eines Zylinders (22) folgen. Der Zylinder (22) ist zum linken Ende der Spirale (19) hin leicht verjüngt. Die letzte Windung (26) der Spirale (19) läßt wieder eine Öffnung frei, desgleichen die letzte Windung (25) am rechten Ende der Spirale (19). Die letzte Windung (25) läuft wiederum mit einer Drahtverlängerung in einen Griff (5) gemäß den Fig. 1 und 2 aus. Wird auf die Spirale (19) ein Teig in Streifen (7) angeordnet, kann wiederum die Luft von dem linken Ende und von dem rechten Ende der Spirale (19) her in das Innere der Spirale (19) streichen und zwischen den Windungen (20) von innen her an die aufgewickelten Teigstreifen (7) gelangen. Beim Backvorgang geht der Teig bis in die Gebäckstückform (27) auf, wobei der gebackene Teig an den Enden (28, 29) wiederum wie in Fig. 1 über die Endwindungen (25, 26) greifen kann.

Zum Entfernen der Spirale (19) aus einer so gebackenen Mozartrolle wird wiederum die Spirale (19) mit Hilfe des Griffes (5) um die Längsachse B-B in Richtung des Pfeiles (23) gedreht. Hierbei dreht sich die Spirale schraubenförmig aus dem Kuchen heraus. Gleichzeitig verringern wiederum die sich vom Kuchenstück lösenden Windungen (20) ihren Durchmesser, so daß die Spirale (19), ohne den Teig zu beschädigen, in Richtung des Pfeiles (24) aus dem Kuchenstück herausbewegt werden kann.

Der Vorteil dieser Spiralausbildung der Form wird darin gesehen, daß die Form, auf die der Kuchenteig in Streifenform gewickelt worden ist, sich ohne Beschädigung des fertig gebackenen Kuchenstückes leicht aus diesem entfernen läßt. Ein weiterer wesentlicher Vorteil besteht darin, daß die Backwärme von allen Seiten her den Kuchenteig äußerst gleichmäßig erreicht, wenn die Drahtwindungen mit einem Luftabstand voneinander angeordnet sind, so daß ein gleichmäßiger Backvorgang erzielt wird und eine gleichmäßige Bräunung.

### Bezugszahlen

- 1: Draht
- 2: Drahtwindungen
- 3: engste Drahtwindung
- 4: größte Drahtwindung
- 5: Griff
- 7: Teigstreifen
- 9: Öffnung
- 10: Kegelstumpf
- 11: Öffnung
- 12: Backstück
- 13: Spirale
- 14: Enden des gebackenen Teiges
- 15: Enden des gebackenen Teiges
- 16: Pfeil
- 17: Innenfläche des Kuchenteiges
- 18: Pfeil
- 19: Spirale
- 20: Drahtwindungen
- 22: Zylinder
- 23: Pfeil
- 24: Pfeil
- 25: letzte Drahtwindung rechts
- 26: letzte Drahtwindung links
- 27: Form des gebackenen Teiges
- 28: Ende des Backstückes
- 29: Ende des Backstückes
- 10, 22: Hohlkörper
- A-A: Achse
- B-B: Achse

## Patentansprüche

1. Vorrichtung zum Backen hohler Teigwaren, bestehend aus einem Hohlkörper, auf dem ein oder mehrere Teigstreifen vor dem Ausbacken gewickelt werden kann bzw. können,
**dadurch gekennzeichnet,** daß der Hohlkörper (10, 22) aus schraubenlinienförmig angeordneten, elastischen Drahtwindungen (2, 21) besteht.

2. Vorrichtung nach Anspruch 1, dadurch gekennzeichnet, daß die Drahtwindungen (2, 21) einen Luftabstand voneinander aufweisen.

3. Vorrichtung nach Anspruch 1, dadurch gekennzeichnet, daß die Drahtwindungen (2) der Oberfläche eines Kegelstumpfes (10) folgen.

4. Vorrichtung nach Anspruch 1, dadurch gekennzeichnet, daß die Drahtwindungen (21) der Oberfläche eines Zylinders (22) folgen.

5. Vorrichtung nach Anspruch 4, dadurch gekennzeichnet, daß der Zylinder (22) zum einen Ende hin sich schwach verjüngend ausgebildet ist.

6. Vorrichtung nach einem oder mehreren der vorhergehenden Ansprüche 1 bis 5, dadurch gekennzeichnet, daß die letzte Drahtwindung (4, 25) auf der Seite des größten Durchmessers des Hohlkörpers (10, 22) in einen Griff (5) ausläuft.

7. Vorrichtung nach Anspruch 6, dadurch gekennzeichnet, daß der Griff (5) aus einer Verlängerung des Drahtes der letzten Windung (4, 25) besteht.

8. Vorrichtung nach Anspruch 7, dadurch gekennzeichnet, daß das als Griff (5) ausgebildete Drahtstück etwa längs des Durchmessers der letzten Drahtwindung (4, 25) angeordnet ist.

9. Vorrichtung nach Anspruch 7 oder 8, dadurch gekennzeichnet, daß das als Griff (5) ausgebildete Drahtstück aus der Ebene der letzten Drahtwindung (4, 25) herausgebogen ist.

10. Vorrichtung nach Anspruch 9, dadurch gekennzeichnet, daß das als Griff (5) ausgebildete Drahtstück etwa halbkreisförmig oder halbellipsenförmig zur Ebene der letzten Drahtwindung (4, 25) verläuft.

11. Vorrichtung nach Anspruch 1, dadurch gekennzeichnet, daß die Drahtwindungen (2, 21) bis zur letzten, engsten Drahtwindung (3, 26) schraubenlinienförmig verlaufen.

12. Vorrichtung nach Anspruch 1, dadurch gekennzeichnet, daß der Drahtdurchmesser 1,5 bis 4 mm beträgt.

13. Vorrichtung nach Anspruch 1, dadurch gekennzeichnet, daß die Drahtwindungen (2, 21) mindestens einen Abstand von der Stärke des verwendeten Drahtes (1) voneinander aufweisen.

14. Vorrichtung nach Anspruch 1, dadurch gekennzeichnet, daß der Draht (1) aus einem Edelstahl besteht.

15. Vorrichtung nach Anspruch 1, dadurch gekennzeichnet, daß der Draht (1) aus einem hitzebeständigen Kunststoffmaterial besteht.

16. Vorrichtung nach Anspruch 1, dadurch gekennzeichnet, daß der Draht (1) biegeelastisch ist.

17. Vorrichtung nach Anspruch 1, dadurch gekennzeichnet, daß die Drahtwindungen (2, 21) eine Antihaftbeschichtung aufweisen.

18. Vorrichtung nach Anspruch 17, dadurch gekennzeichnet, daß die Drahtwindungen (2, 21) eine Beschichtung aus Teflon (Handelsname) aufweisen.

## Claims

1. Device for baking hollow pastry goods, consisting of a hollow body on which one or more pastry strips can be wound prior to the baking process,
**characterized in that** the hollow body (10,22) consists of helically arranged resilient wire coils (2,21).

2. Device according to claim 1, characterized in that the wire coils (2,21) have an air clearance from one another.

3. Device according to claim 1, characterized in that the wire coils (2) follow the surface of a truncated cone (10).

4. Device according to claim 1, characterized in that the wire coils (21) follow the surface of a cylinder (22).

5. Device according to claim 4, characterized in that the cylinder (22) is slightly tapered towards one end.

6. Device according to one or more of the preceding claims 1 through 5 characterized in that the last wire coil (4,25) runs out into a handle (5) on the side of the largest diameter of the hollow body (10,22).

7. Device according to claim 6, characterized in that the handle (5) consists of an extension of the wire of the last coil (4, 25).

8. Device according to claim 7, characterized in that the piece of wire formed as the handle (5) is positioned approximately along the diameter of the last wire coil (4,25).

9. Device according to claim 7 or 8, characterized in that the piece of wire formed as the handle (5) is bent out from the level of the last wire coil (4,25).

10. Device according to claim 9, characterized in that the piece of wire formed as the handle (5) runs in an approximately semicircular or semi-elliptical shape to the level of the last wire coil (4,25).

11. Device according to claim 1, characterized in that the wire coils (2,21) run helically as far as the last, narrowest wire coil (3,26).

12. Device according to claim 1, characterized in that the wire diameter is 1.5 to 4 mm.

13. Device according to claim 1 characterized in that the wire coils (2,21) have a spacing from one another of at least the thickness of the used wire (1).

14. Device according to claim 1, characterized in that the wire (1) is made of high-grade steel.

15. Device according to claim 1, characterized in that the wire (1) is made of a heat-resistant plastic material.

16. Device according to claim 1, characterized in that the wire (1) is flexurally resilient.

17. Device according to claim 1 characterized in that the wire coils (2,21) have a non-stick coating.

18. Device according to claim 17, characterized in that the wire coils (2,21) have a Teflon (trade name) coating.

## Revendications

1. Dispositif pour la cuisson au four de pâtes pâtissières creuses, qui est formé par un corps creux autour duquel une ou plusieurs bande(s) de pâte peut ou peuvent être enroulé(es) avant la cuisson au four, caractérisé en ce que le corps creux (10, 22) est formé par des spires (2, 21) de fil flexible, disposées en hélice.

2. Dispositif selon la revendication 1, caractérisé en ce que les spires de fil (2, 21) sont écartées les unes des autres.

3. Dispositif selon la revendication 1, caractérisé en ce que les spires de fil (2) suivent la surface d'un tronc de cône (10).

4. Dispositif selon la revendication 1, caractérisé en ce que les spires de fil (21) suivent la surface d'un cylindre (22).

5. Dispositif selon la revendication 4, caractérisé en ce que le cylindre (22) se rétrécit très légèrement vers une extrémité.

6. Dispositif selon l'une quelconque des revendications 1 à 5, caractérisé en ce que la dernière spire de fil (4, 25), sur le côté du corps creux (10, 22) présentant le plus grand diamètre, se termine en formant une anse (5).

7. Dispositif selon la revendication 6, caractérisé en ce que l'anse (5) est formée par le prolongement du fil de la dernière spire (4, 25).

8. Dispositif selon la revendication 7, caractérisé en ce que la partie du fil conçue en forme d'anse (5) est disposée pratiquement le long du diamètre de la dernière spire de fil (4, 25).

9. Dispositif selon la revendication 7 ou 8, caractérisé en ce que la partie du fil conçue en forme d'anse (5) est courbée en ressortant du plan de la dernière spire de fil (4, 25).

10. Dispositif selon la revendication 9, caractérisé en ce que la partie du fil conçue en forme d'anse (5) s'étend quelque peu en forme de demi-cercle ou de demi-ellipse par rapport au plan de la dernière spire de fil (4, 25).

11. Dispositif selon la revendication 1, caractérisé en ce que les spires de fil (2, 21) s'étendent jusqu'à la dernière spire de fil (3, 26), la plus étroite, en formant une hélice.

12. Dispositif selon la revendication 1, caractérisé en ce que le diamètre du fil est compris entre 1,5 et 4 mm.

13. Dispositif selon la revendication 1, caractérisé en ce que les spires de fil (2, 21) sont écartées les unes des autres par une distance au moins égale à l'épaisseur du fil (1) utilisé.

14. Dispositif selon la revendication 1, caractérisé en ce que le fil (1) est réalisé en acier fin et spécial.

15. Dispositif selon la revendication 1, caractérisé en ce que le fil (1) est réalisé dans une matière plastique résistant aux températures élevées.

16. Dispositif selon la revendication 1, caractérisé en ce que le fil (1) est un fil flexible.

17. Dispositif selon la revendication 1, caractérisé en ce que les spires de fil (2, 21) sont revêtues d'une couche antiadhésive.

18. Dispositif selon la revendication 17, caractérisé en ce que les spires de fil (2, 21) sont revêtues de Téflon (nom déposé).
